# DEMANDE DE BREVET EUROPEEN

(11) **EP 1 130 553 A1**
(43) Date de publication de la demande: **05.09.2001**
(21) Numéro de dépôt: 01400457.6
(22) Date de dépôt: 21.02.2001
(51) Int. Cl.: G07F 17/30, H04H 1/02, G11B 19/08

(54) **Procédé de commande anticipée d'une sélection, système numérique et juke-box permettant la mise en oeuvre du procédé**

(30) Priorité: 23.02.2000 FR 0002252
(71) Demandeur: TOUCHTUNES MUSIC CORPORATION, Las Vegas, NV 89104 (US)
(72) Inventeur: Nathan, Guy, Nun's Island, Quebec H3E 1H7 (CA); Mastronardi, Tony, Pierrefonds, Quebec H8Y 3L2 (CA); Dion, Dominique, Iles des Soeurs, Verdun (Quebec) H3E 1M2 (CA)
(74) Mandataire: Debay, Yves

(57) **Abrégé**

La présente invention concerne un procédé de commande anticipée d'une sélection, caractérisé en ce qu'il comporte une étape d'affichage puis de sélection d'un menu (8520, 8521) permettant, entre autres, des requêtes particulières;
une étape d'affichage de l'événement (8525a) pour lequel la commande anticipée de sélection est effectuée puis de sélection de l'événement;
une étape (8522) d'affichage de l'identité d'un équipement destination sur lequel la sélection doit être exécutée puis de sélection de ce matériel;
une étape d'affichage (8523) de la date et de l'heure auxquelles la sélection doit être exécutée sur l'équipement destination ;
une étape d'enregistrement (8529) ou de téléchargement sur un fichier de requêtes particulières uniquement après vérification du paiement.

## Description

La présente invention concerne un procédé de commande anticipée d'une sélection, le système numérique et le juke-box permettant la mise en oeuvre du procédé.

Il est connu par la demande de brevet français 98 09358 déposée le 22/07/98, une fonctionnalité spécifique de juke-box et d'un réseau connectant à un serveur un ensemble de juke-boxes permettant de diffuser sur l'ensemble des systèmes de reproduction la chanson titre d'un nouvel album d'un chanteur à une date déterminée constituant le jour de diffusion et de mise dans le commerce de la chanson. Toutefois un tel système ne permet pas à un particulier utilisateur du juke-box ou connecté par Internet au serveur central supervisant une pluralité de juke-box de sélectionner une chanson et de la commander pour faire effectuer son exécution à une date déterminée sur un juke-box déterminé ou sur plusieurs juke-boxes déterminés.

C'est un premier but de la présente invention de pallier cet inconvénient de l'art antérieur en proposant un procédé de commande anticipée d'une sélection.

Ce but est atteint par un procédé de commande anticipée d'une sélection, caractérisé en ce qu'il comporte une étape d'affichage puis de sélection d'un menu permettant, entre autres, des requêtes particulières;
une étape d'affichage de l'évènement pour lequel la commande anticipée de sélection est effectuée puis de sélection de l'évènement;
une étape d'affichage de l'identité d'un équipement destination sur lequel la sélection doit être exécutée puis de sélection de ce matériel;
une étape d'affichage de la date et de l'heure auxquelles la sélection doit être exécutée sur l'équipement destination ;
une étape d'enregistrement ou de téléchargement sur un fichier de requêtes particulières uniquement après vérification du paiement.

Un autre but est de proposer un juke-box numérique permettant la mise en oeuvre du procédé de commande anticipée d'une sélection.

Ce but est atteint par un dispositif de commande anticipée d'une sélection caractérisé en ce que le juke-box d ou le serveur d comportent des moyens de faire afficher sur un écran à proximité de l'utilisateur des informations le guidant dans le choix de requêtes spécifiques;
des moyens d'enregistrer ces requêtes dans un fichier spécifique ;
des moyens d'examen périodique du fichier enregistré sur l'équipement pour déclencher l'exécution de la requête à l'heure et à la date déterminées ou déclencher son téléchargement.

Enfin, un dernier but est de proposer un système numérique formant un réseau de télédistribution de données audiovisuelles permettant la mise en oeuvre du procédé.

Ce but est atteint par un système numérique formant réseau de télédistribution, caractérisé en ce que le réseau de télédistribution comporte un serveur central relié au réseau Internet d'une part et d'autre part, par un second réseau, à un ensemble de juke-boxes, chacun identifiable par un numéro d'identité ou une adresse permettant de charger chaque requête spécifique sur le juke-box destinataire et des moyens de scruter sur chaque juke-box le fichier contenant les requêtes spécifiques pour les faire exécuter lorsque l'heure local et le jour correspondent à l'heure et au jour choisis.

D'autres particularités et avantages de la présente invention apparaîtront plus clairement à la lecture de la description ci-après faite en référence aux dessins annexés dans lesquels :

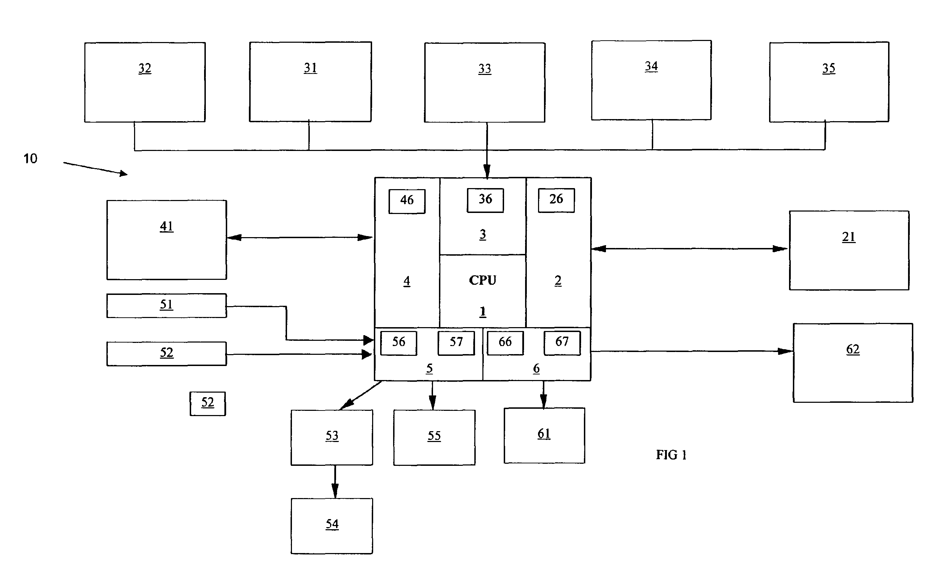

- la figure 1 représente une vue schématique du schéma électrique du matériel constituant l'invention ;
- la figure 2 représente un logigramme des relations entre les modules de librairies et les modules objets importés sur le juke-box ;
- la figure 3 représente de façon schématique les différentes intéractions entre un utilisateur, le juke-box et un serveur relié à ce dernier par un réseau de distribution ;
- la figure 4 représente les différentes étapes du procédé mis en oeuvre par les dispositifs de l'invention.

De préférence, mais cependant de manière non limitative, le système de reproduction audiovisuelle (juke-box) (10) utilise les éléments matériels énumérés et référencés ci-après.

L'unité centrale (1) à microprocesseur est un système compatible PC de haute performance, le choix lors de la mise en oeuvre s'étant porté sur un système du type Pentium qui possède des moyens de mémorisation et par exemple les caractéristiques suivantes:
- compatibilité avec le bus local Vesa,
- antémémoire de processeur: 256 kO minimum,
- mémoire vive: RAM de 32 MO
- ports série de haute performance,
- adaptateur graphique type SVGA à microprocesseur,
- contrôleur de bus type SCSI/2,
- mémoire vive RAM statique auto-alimentée.

Toute autre unité centrale, possédant des performances équivalentes ou supérieures, pourra être utilisée dans l'invention.

Cette unité centrale commande et gère un circuit de commande de son (5), un circuit (4) de commande des télécommunications, un circuit (3) de commande des entrées, un circuit (2) de commande de la mémorisation de masse et un circuit (6) de commande des moyens de visualisation. Les moyens de visualisation se composent principalement d'un moniteur vidéo (62) à écran plat sans entrelacement de type SVGA à haute résolution et faible rayonnement, c'est ce moniteur qui est utilisé pour la reproduction d'images (par exemple les couvertures d'albums des sélections musicales), de graphiques ou de clips vidéo.

Des moyens de mémorisation de masse (21), utilisant par exemple des disques durs de type SCSI haute vitesse et haute capacité, sont associés aux moyens de mémorisation déjà présents dans le dispositif à microprocesseur. Ces moyens servent au stockage d'informations audiovisuelles numérisées, compressées et éventuellement en cryptées.

Un adaptateur de modem de télécommunications (41) haute vitesse est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur-tuner (53) relié au circuit électronique (5) incorporant deux tampons mémoire (56, 57) et de type synthétiseur de musique à processeur pour signaux digitaux (DSP) prévu pour supporter un grand nombre de sources d'entrée tout en fournissant une sortie de signaux numériques décryptés et décompressés présentant une qualité de type CD (disque compact) ou de type Hifi.

De même, le circuit de commande des moyens de visualisation comporte également deux mémoires tampon (66, 67) dont le but est explicité ultérieurement.

Une alimentation thermiquement régulée de 240 watts ventilée fournit l'énergie au système. Cette alimentation est protégée contre les surintensités et les suroscillations.

Le système de reproduction audiovisuelle gère, par le biais de son circuit contrôleur d'entrée (3), un écran tactile (33) qui inclut un panneau de revêtement de la vitre utilisant la "technologie avancée d'onde de surface" ainsi qu'un contrôleur de bus de type AT. Cet écran tactile, après avoir affiché sur le moniteur vidéo (62) ou l'écran d'un téléviseur (61), diverses informations de sélection à utiliser par les clients, ainsi que des informations de commande et de contrôle de gestion à utiliser par le gérant, permet au propriétaire du système d'effectuer une sélection. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface également le système avec un ensemble télécommande (31) constitué, par exemple, d'une télécommande RF à fréquence radio.

Un dispositif de paiement de redevances (35) est également relié au circuit d'interface d'entrée (3). Il est également possible d'utiliser tout autre dispositif qui permette la réception de tout mode de paiement par pièces, billets, jetons, cartes magnétiques ou à puces ou toute combinaison des moyens de paiement.

Pour loger le système, il est de plus prévu un châssis ou bâti avec garnitures extérieures personnalisables.

Outre ces éléments, un microphone (55) sans fil est relié au contrôleur de son (5), ce qui permet de transformer le juke-box en un puissant système d'annonces et d'informations destinées au public, ou éventuellement en machine de karaoké. De même, un système de haut-parleurs sans fil peut être utilisé par le système pour diffuser les chansons dans d'autres locaux.

L'ensemble (31) de commande à distance permet au gérant, par exemple de derrière le bar, d'accéder et de contrôler différentes commandes telles que:
- la commande marche/arrêt du microphone,
- la commande de mise en sourdine des haut-parleurs,
- la commande de contrôle de volume sonore,
- la commande d'annulation de la sélection musicale en train d'être écoutée.

Deux tampons (56, 57) sont associés au circuit contrôleur de son (5) pour permettre de mémoriser chacun, de façon alternative, une information correspondant à environ au moins un quart de seconde de son. De même deux tampons (66, 67) sont associés au circuit contrôleur de vidéo (6) capables, chacun et alternativement, de mémoriser environ au moins un dixième de seconde d'image. Enfin un tampon respectif (46, 36, 26) est associé à chacun des circuits contrôleur de communication (4), d'interface d'entrée (3) et de mémorisation (2).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâche performant qui autorise efficacement l'exécution simultanée de multiples fragments de code. Ce logiciel d'exploitation permet ainsi les exécutions concurrentes, de manière ordonnée et, en évitant tout conflit, d'opérations réalisées sur les moyens de visualisation, les moyens de reproduction sonore de même que la gestion des liaisons de télécommunications au travers du réseau de distribution. De plus, ce logiciel présente une grande flexibilité.

Le système d'exploitation est partagé en modules comportant un premier module d'amorçage (7) lui-même subdivisé en un premier module (70) de programme principal, appelé "JUK.EXE", qui vérifie la mémoire et vérifie si le minimum d'objets est présent pour assurer le fonctionnement du juke-box ; un second module (71) lié dynamiquement et dépendant de celui-ci est constitué par le module appelé "JUKECORE.DLL". La fonction de ce second module (71) est de contenir les librairies de langage C et d'assurer la tâche principale.

L'architecture du système d'exploitation comporte une répartition des différentes tâches en modules logiciels reliés entre eux par des liens dynamiques ou constitués de sous-programmes exécutables présentant des liens de dépendance principale avec d'autres parties du système d'exploitation. Chacun des modules est constitué de fichiers d'objets ou de librairies de liens dynamiques "dynamic links library" organisés selon une pluralité de niveaux de dépendance décrits dans les attributs. Les attributs d'un objet ou d'une librairie indiquent le numéro de version et les dépendances du fichier d'objet ou de la librairie par rapport à d'autres fichiers d'objets, comme décrit ci-après pour le module appelé PARSER.DJL. Chaque attribut indique le niveau attribué au module. Ainsi, le module JUK.EXE (70) est de niveau supérieur aux modules JUKECORE.DLL (71), TLS.DLL (72), CRDE.DLL (73), GFX.DLL (74), WDLL.DLL (75), JEEP.DLL (9) et TELECOM.DLL (10), mais le module TELECOM.DLL (10) est dépendant du module JEEP.DLL (9) (voir lien 910), donc de niveau inférieur au module JEEP.DLL (9).

De même, JEEP.DLL (9) (voir lien 759) est de niveau inférieur au module WDLL.DLL (75), car dépendant de celui-ci et TLS (lien 725) de niveau supérieur à WDLL (75). Par contre, les modules TLS.DLL et GFX.DLL peuvent être de même niveau. La tâche principale comporte un module (JUKECORE.DLL) destiné à initialiser ou charger le module (73), le noyau du programme appelé "CRDE.DLL", à initialiser ou charger le module (74) de gestion des graphiques (GFX.DLL), à initialiser ou charger le module (75) de chargement (WDLL.DLL) des librairies, à charger le module (10) Télécom des tâches de télécommunications (DLL), à charger le module (72) TLS.DLL qui contient toutes les utilisations nécessaires au juke-box, aux télécom, heure, décryptage, etc....., à initialiser ou charger la librairie des programmes JEEP.DLL (Juke Execution Exchange Protocol) assurant les tâches de serveur d'intégrité, de requête de chargement et le dialogue avec le serveur, et à lancer le module de programme (80, SILOAD.DLL) en tant que tâche principale. La tâche principale de l'application juke-box comporte le module (SILOAD.DLL) contenant la librairie du programme chargeur destinée à vérifier les versions de librairie à liens dynamiques, requises dans le module de chargement des librairies (WDLL.DLL), de les charger ou d'appeler le module des tâches de télécommunication pour effectuer le transfert de fichiers. Le module WDLL.DLL comporte la liste dans un fichier (DLL.DEFAULT) des versions minimales nécessaires au fonctionnement ainsi que la liste de toutes les fonctions représentées, soit par des bibliothèques (LIBRARY) ayant pour suffixe (DLL, DJL), soit par des fichiers d'objets ayant pour suffixe (DJO). Chaque objet ou bibliothèque contient la liste de toutes les fonctions dont la bibliothèque ou l'objet a besoin, ainsi que les numéros de version et les dépendances. Le module de chargement des librairies WDLL.DLL assure la gestion de tous les nouveaux modules, s'assure des interdépendances et vérifie que les modules téléchargés n'ont aucune dépendance et ont été chargés avec les versions nécessaires. La partie applicative (8) propre à un juke-box comporte un certain nombre de modules chargés et lancés par le module SILOAD.DLL et définissant les fonctions "fenêtres" de l'affichage, qui sont les suivantes :
- un module (81) appelé MOUSE.DJL, d'exploitation des signaux souris ou de l'écran tactile ;
- un module (82) appelé WMESSAGE.DJL d'exploitation des messages échangés entre les objets et les différents autres modules ;
- un module (83) appelé FIL.DJL de gestion des fichiers sur disques ;
- un module (84) appelé FILIO.DJL, de lecture-écriture de fichiers sur disques ;
- un module (85) appelé JSTRUCT.DJL, de surveillance de tous les événements générés par les équipements, tels que l'écran tactile, la carte son, l'interface de traitement des équipements monétaires.

Le module SILOAD.DLL gère le chargement des modules spécifiques à la tâche du terminal, à savoir tous les modules DJL déjà énumérés ainsi que les modules de librairie juke-box (87) constitués par un module appelé WOBJECT.DJL (870) qui gère les objets, tels que le mixeur, les achats ; un module appelé WCURSOR.DJL (871) qui gère les mouvements du curseur ; un module (872) appelé DBMAPI.DJL qui gère la base de données; un module (873) appelé WFONTS.DJL qui gère tous les types de fonte ; un module (874) appelé PARSER.DJL (Programme d'analyse syntaxique) qui analyse et génère les écrans à partir du script qui induit un fichier de configuration WIN.DEF et vérifie la grammaire à l'aide du module (876) appelé "GRAMMAR.DJL" et d'un module (875) appelé "LEXY.DJL" qui est le module lexique d'assignation des fonctions des mots à l'intérieur du langage. Le module PARSER.DJL (874) contient dans son entête de fichier les informations suivantes :
- char ^{*}parser_version_info= "DLL_INFO DJL;"
   "DLL-NAME PARSER.DJL;"
   "VERSION 1;"
   "CREATOR KENDALF;"
   "REQUIRIES lexyy.djl;4;"
   "REQUIRIES grammar-.djl;5";

Tous les modules et toutes les librairies (DJO, DLL, DJL) contiennent des informations semblables à celles du module PARSER.DJL et ces informations déterminent les nécessités de version et de dépendance.

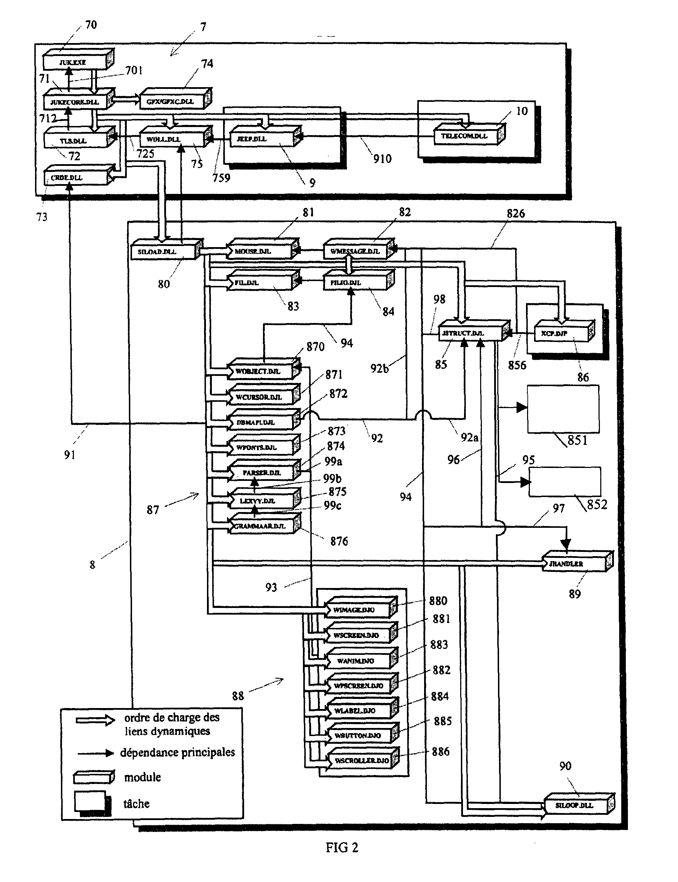

Ainsi, le module PARSER.DJL a besoin des modules LEXY.DJL version 4 et du module GRAMMAR version 5 pour permettre son exécution par le système. Les flèches doubles de la figure 2, reliant les différents modules entre eux, donnent l'ordre de chargement des différents fichiers.

Ainsi, comme on l'a vu précédemment, il faudra commencer par charger le module JUKE.EXE pour ensuite charger le module JUKECORE.DLL et pouvoir, à partir du module JUKECORE.DLL, charger les modules GFX.DLL, TLS.DLL, WDLL.DLL, JEEP.DLL, TELECOM.DLL, CRDE.DLL et SILOAD.DLL.

Un ensemble de modules (88) contient la liste des fichiers qu'il faut inclure pour gérer les fenêtres d'un affichage à fenêtres prévu sur le moniteur du terminal de type juke-box.

Cette liste d'objets est constituée :
- d'un fichier d'objets (883) "WPSCREEN.DJO" qui permet de définir la page principale sur le moniteur ;
- d'un fichier d'objets (881) "WSCREEN.DJO" qui permet de déterminer dans cette page principale le nombre d'écrans disponibles et ainsi permettre l'affichage de plusieurs fenêtres ou écrans ;
- d'un fichier d'objets (880) "WIMAGE.DJO" qui permet de déterminer et de définir dans l'écran l'image qu'il utilisera ;
- d'un fichier d'objets (882) "WANIM.DJO" qui permet de définir l'animation lorsque l'image est animée ;
- d'un fichier d'objets (885) "WBUTTON.DJO" qui permet de définir et gérer les boutons qui sont utilisés sur l'écran de la page principale tels que les boutons d'actionnement utilisés dans l'interface graphique définie dans la demande de brevet PCT WO 96/12258 ;
- d'un fichier d'objets (884) "WLABEL.DJO" qui permet de créer des étiquettes permettant l'écriture par-dessus un objet ; et
- d'un fichier d'objets (886) "WSCROLLER.DJO" qui permet de définir des zones d'affichage à défilement vertical.

Le fichier de configuration WIN.DEF fait appel selon les besoins à un ou plusieurs des fichiers ^{*}.DJO énumérés ci-dessus.

Une librairie appelée "JHANDLER" permet de définir les utilisations fixes des écrans et donc, de déterminer quelles sont les interfaces qui assurent la liaison avec les différents objets définis par les modules précédents.

Le module (86) de librairie "XCP.DJL" permet de gérer les tâches de paiement telles que les systèmes de réception de billets ou les unités de paiement à monnaie ou à carte et permet également la sauvegarde des informations de base dans le IBUTTON qui est un circuit intégré de mémorisation de codes secrets pour le gérant du juke-box et utilisables par exemple pour le décryptage des fichiers ou chansons encryptés.

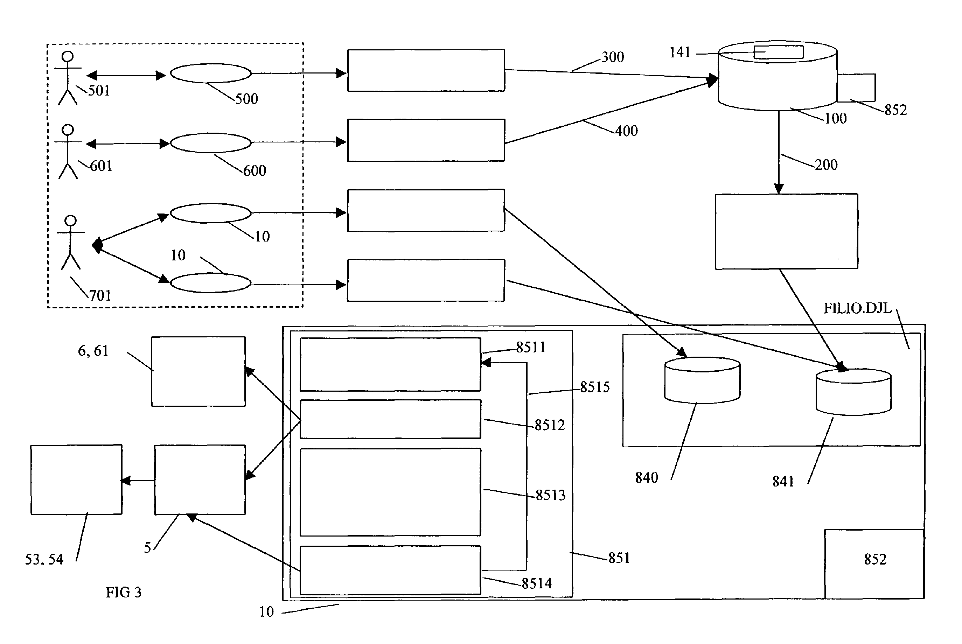

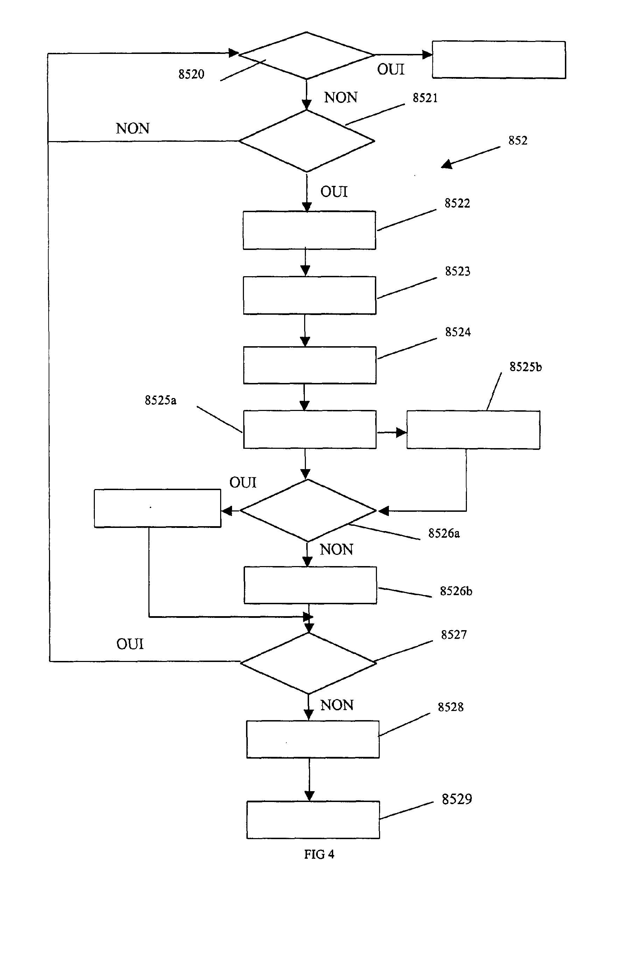

Le module JSTRUCT.DJL (85) lancera lorsqu'un événement correspondra à la fin de la sélection de chansons, le module (851) appelé "disc-jockey" dont le rôle sera explicité ci-après en liaison avec la figure 3. Le même module JSTRUCT.DJL lancera selon l'évènement détecté le module (852) de traitement de requêtes dont le rôle sera explicité ci-après en liaison avec la figure 4. Ce même module de traitement de requêtes (852) est également implanté sur le serveur central (100, figure 3) de façon à permettre à un utilisateur (601) connecté au serveur par un terminal (600) et le réseau Internet (400) de commander de façon anticipée une sélection. Un artiste de musique (501) peut également, par un terminal (500) connecté au serveur (100) par le réseau Internet (300), effectuer une requête spéciale pour la promotion d'une chanson à exécuter sur plusieurs juke-boxes à une heure déterminée d'un jour donné. Enfin, un utilisateur (701), dans un local équipé d'un ou plusieurs juke-boxes, peut effectuer sur le juke-box (10) lui-même la sélection de chansons ou des requêtes spéciales de commandes anticipées d'une sélection ou d'un évènement spécifique. Ces requêtes sont chargées, pour les premières dans la file de chansons (840), pour les secondes dans un fichier (841) contenant les requêtes spéciales et toutes les informations permettant le traitement de ces requêtes spéciales. Le serveur (100) comportera également un fichier (141) stockant ces requêtes spéciales jusqu'au moment où le serveur effectue une transmission vers le juke-box spécifique ou l'ensemble des juke-boxes visés par une ou plusieurs requêtes. Cette transmission s'effectue par un réseau (200), par exemple de télécommunications. Le module de disc-jockey (551) exécute une première étape (8511) dans laquelle il regarde dans le fichier (841) du juke-box s'il existe des requêtes spéciales pour l'heure actuelle et la date actuelle. Dans l'affirmative, le disc-jockey exécute une telle requête à l'étape (8512) et lance la reproduction de la sélection commandée de façon anticipée ainsi qu'éventuellement le message particulier. A la fin de cette opération le disc-jockey vérifie, à l'étape (8513), s'il y a d'autres chansons commandées de façon anticipée ou passe à l'exécution de la chanson suivante stockée dans la file du fichier (840). A l'étape (8514) le disc-jockey lance l'exécution de cette chanson. Puis le disc-jockey reboucle sur la première étape (8511). Le module de programme (852) de traitement des requêtes spéciales comporte, comme représenté à la figure 4, des moyens d'effectuer un affichage demandant, à l'étape (8521), à l'utilisateur devant le juke-box ou devant un terminal relié à Internet, s'il souhaite effectuer la sélection d'une chanson à l'étape (8520) ou s'il souhaite effectuer une requête spéciale. Dans le cas où celui-ci souhaite effectuer une requête spéciale, le programme déclenche l'affichage par les modules objets décrits précédemment des fenêtres permettant à l'utilisateur de définir, à l'étape (8522), l'adresse du juke-box ou de sélectionner cette adresse dans une liste téléchargée par le serveur. L'utilisateur va ainsi définir soit le juke-box dont il connaît soit l'adresse, soit le juke-box dont il détermine dans la liste qu'il est le plus proche de la personne à qui il souhaite offrir la sélection que l'utilisateur commande de façon anticipée. A l'étape suivante (8523), le programme provoque l'affichage des écrans permettant à l'utilisateur d'inscrire le nom de l'offrant ainsi que le nom du destinataire. Puis, à l'étape (8524), le programme provoque l'affichage des fenêtres permettant de définir le jour et l'heure d'exécution de la sélection.

Une fois cette définition effectuée, le programme passe à l'étape (8525a) où l'utilisateur sélectionne le type d'évènement qu'il souhaite célébrer. Dans ce cas, le programme fait afficher une liste d'évènements (8525b) définissant des évènements tels qu'anniversaire, mariage, fiançailles, etc. L'utilisateur, soit par action sur l'écran tactile, soit par utilisation d'un clavier ou d'une souris, va amener un curseur sur l'un des évènements et valider cette sélection. Une fois cette validation effectuée, le programme passe à l'étape (8526a) où il provoque l'affichage d'un message demandant à l'utilisateur s'il souhaite offrir cette sélection avec un message vocal préenregistré. Dans l'affirmative, le programme provoque l'affichage de fenêtres permettant de guider l'utilisateur dans la sélection d'un message vocal préenregistré. Dans la négative, le programme passe à l'étape suivante (8526b) pour permettre à l'utilisateur d'effectuer un enregistrement vocal spécifique et le stocker avec les données constituant le fichier de cette requête spécifique de commande anticipée. Le programme, à l'étape (8527), demande par un affichage si l'utilisateur souhaite effectuer une nouvelle requête, dans l'affirmative il reboucle sur la première étape (8520), dans la négative il demande à l'utilisateur d'effectuer un paiement à l'étape (8528). De façon connue, ce paiement peut s'effectuer par carte de crédit magnétique ou à puce ou tout autre moyen tel que monnayeur, accepteur de billets ou encore par l'affichage du nombre d'unités de communication téléphonique qui seront facturées sur la ligne de l'utilisateur et acceptation de la facturation. Une fois ce paiement vérifié et effectué, le programme passe à l'étape de sauvegarde dans le fichier (841) contenant la liste des requêtes spéciales à destination du disc-jockey (DJSRL). Ce fichier (841) se trouve, soit dans le juke-box dans le cas où la sélection et la requête spéciale se font localement sur le même juke-box installé dans le bar, soit dans le fichier (141) du serveur si la sélection doit être exécutée sur un autre juke-box. Le juke-box (10) comporte également un programme qui peut détecter les requêtes spéciales effectuées à destination d'un autre juke-box implanté dans un autre lieu et permet, par transmission sur le réseau (200) vers le serveur (100), d'écrire cette requête dans le fichier (141) du serveur, de façon à ce que ce dernier, lorsqu'il exécute sa routine périodique de chargement des différents juke-boxes télécharge celui-ci avec les requêtes spécifiques le concernant. Pour ce faire, le serveur, lorsqu'il reçoit une telle requête spéciale provenant d'un juke-box du réseau, va examiner cette requête en comparant l'adresse du juke-box contenue dans la requête avec les adresses contenues dans sa base de données et déterminer ainsi l'identité du juke-box auquel il doit adresser la requête spéciale. Lors des mises à jour périodiques ou des communications périodiques, cette requête spéciale sera acheminée vers le juke-box destinataire.

Il est bien évident que pour les communications entre juke-box et serveur ou terminal Internet et serveur, les informations sont compressées et encodées de façon à garantir une confidentialité alors que les messages vocaux peuvent être enregistrés en clair sans forcément nécessiter un encodage mais sont compressés en prévision du stockage pour diminuer la zone nécessaire au stockage sur le juke-box.

Ainsi, selon l'invention, le procédé de sélection comporte une étape d'affichage puis de sélection d'un menu (8520, 8521) permettant, entre autres, des requêtes particulières;
une étape d'affichage de l'évènement (8525a) pour lequel la commande anticipée de sélection est effectuée puis de sélection de l'événement;
une étape (8522) d'affichage de l'identité d'un équipement destination sur lequel la sélection doit être exécutée puis de sélection de ce matériel;
une étape d'affichage (8523) de la date et de l'heure auxquelles la sélection doit être exécutée sur l'équipement destination ;
une étape d'enregistrement (8529) ou de téléchargement sur un fichier de requêtes particulières uniquement après vérification du paiement.

Selon une autre particularité de l'invention, celle-ci comporte une étape (8526) de choix ou d'enregistrement d'un message spécifique.

Selon une autre particularité, l'invention comporte une étape (8526b) d'enregistrement de messages consistant à enregistrer un message personnalisé.

Selon une autre particularité, l'invention comporte une étape (8526a) de choix de messages consistant à choisir un message parmi une pluralité de messages.

Selon une autre particularité, l'invention comporte une étape de connexion à Internet et d'appel du site serveur (100) de l'ensemble des juke-boxes.

Selon une autre particularité, les étapes d'affichage s'effectuent par envoi de messages Internet vers le terminal (600) permettant d'afficher les étapes de sélection nécessaires aux étapes de sélection, ces étapes de sélection ou de détermination s'effectuent par des messages envoyés du terminal (600) vers le serveur (100) en fonction des actions effectuées par l'utilisateur sur son terminal pour définir sa sélection anticipée.

L'invention comporte une étape dans laquelle les messages et requêtes sont enregistrés sur le fichier (141) du serveur central (100) avec l'adresse de l'équipement (10) destinataire puis téléchargés sur celui-ci à un moment déterminé sur les affichages effectués.

L'invention comporte une étape d'examen d'un fichier spécifique (841) de chaque équipement (10) dans lequel les requêtes sont enregistrées pour déterminer si la date et l'heure courantes sur l'équipement (10) correspondent à la date et l'heure souhaitées pour l'exécution de la requête anticipée.

De même, le juke-box (10) ou le serveur (100) comportent des moyens de faire afficher sur un écran à proximité de l'utilisateur des informations le guidant dans le choix de requêtes spécifiques;
des moyens d'enregistrer ces requêtes dans un fichier spécifique (841, 141);
des moyens d'examen périodique du fichier (841, 141) enregistré sur l'équipement pour déclencher l'exécution de la requête à l'heure et à la date déterminées ou déclencher son téléchargement.

L'invention comporte des moyens éventuels de transmission à distance de ces requêtes à destination de l'équipement destinataire.

Selon l'invention, les moyens d'afficher sont constitués par des modules objets rajoutés dans les fichiers ^{*}.DJO appelés selon les besoins par le fichier de configuration du juke-box.

Les fichiers (840, 841) seront sauvegardés dans le module FILO.DJL et les modifications de programme nécessaires au fonctionnement et à la mise en oeuvre de ce procédé seront téléchargés dans les différents modules, conformément au processus de téléchargement défini dans la demande de brevet 98 09358.

Le dispositif comporte également un moyen de définir les règles d'exécution de la file de chansons et de modifier ainsi le comportement du disc-jockey, selon un des critères suivants : premier dans la file, premier sorti (FIFO), de façon aléatoire en sélectionnant les chansons les plus populaires d'abord, en éliminant la deuxième chanson consécutive du même artiste ou en se basant sur une combinaison des règles précédentes ou de toute autre règle.

Le réseau de télédistribution comporte un serveur central relié au réseau Internet d'une part et d'autre part, par un second réseau, à un ensemble de juke-boxes, chacun identifiable par un numéro d'identité ou une adresse permettant de charger chaque requête spécifique sur le juke-box destinataire et des moyens de scruter sur chaque juke-box le fichier contenant les requêtes spécifiques pour les faire exécuter lorsque l'heure local et le jour correspondent à l'heure et au jour choisis.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de commande anticipée d'une sélection, **caractérisé en ce qu**'il comporte une étape d'affichage puis de sélection d'un menu (8520, 8521) permettant, entre autres, des requêtes particulières;
une étape d'affichage de l'évènement (8525a) pour lequel la commande anticipée de sélection est effectuée puis de sélection de l'évènement;
une étape (8522) d'affichage de l'identité d'un équipement destination sur lequel la sélection doit être exécutée puis de sélection de ce matériel;
une étape d'affichage (8523) de la date et de l'heure auxquelles la sélection doit être exécutée sur l'équipement destination ;
une étape d'enregistrement (8529) ou de téléchargement sur un fichier de requêtes particulières uniquement après vérification du paiement.

2. Procédé de commande anticipée d'une sélection selon la revendication 1, **caractérisé en ce qu**'il comporte une étape (8526) de choix ou d'enregistrement d'un message spécifique.

3. Procédé de commande anticipée d'une sélection selon la revendication 2, **caractérisé en ce qu**'il comporte une étape (8526b) d'enregistrement de messages consistant à enregistrer un message personnalisé.

4. Procédé de commande anticipée d'une sélection selon la revendication 2, **caractérisé en ce qu**'il comporte une étape (8526a) de choix de messages consistant à choisir un message parmi une pluralité de messages.

5. Procédé de commande anticipée d'une sélection selon une des revendications 1 à 4, **caractérisé en ce qu**'il comporte une étape de connexion à Internet et d'appel du site serveur (100) de l'ensemble des juke-boxes.

6. Procédé de commande anticipée d'une sélection selon la revendication 5, **caractérisé en ce que** les étapes d'affichage s'effectuent par envoi de messages Internet vers le terminal (600) permettant d'afficher les étapes de sélection nécessaires aux étapes de sélection, ces étapes de sélection ou de détermination s'effectuent par des messages envoyés du terminal (600) vers le serveur (100) en fonction des actions effectuées par l'utilisateur sur son terminal pour définir sa sélection anticipée.

7. Procédé de commande anticipée d'une sélection selon une des revendications précédentes, **caractérisé en ce qu**'il comporte une étape dans laquelle les messages et requêtes sont enregistrés sur le fichier (141) du serveur central (100) avec l'adresse de l'équipement (10) destinataire puis téléchargés sur celui-ci à un moment déterminé sur les affichages effectués.

8. Procédé de commande anticipée d'une sélection selon la revendication 1, **caractérisé en ce qu**'il comporte une étape d'examen d'un fichier spécifique (841) de chaque équipement (10) dans lequel les requêtes sont enregistrées pour déterminer si la date et l'heure courantes sur l'équipement (10) correspondent à la date et l'heure souhaitées pour l'exécution de la requête anticipée.

9. Dispositif de commande anticipée d'une sélection **caractérisé en ce que** le juke-box (10) ou le serveur (100) comportent des moyens de faire afficher sur un écran à proximité de l'utilisateur des informations le guidant dans le choix de requêtes spécifiques;
des moyens d'enregistrer ces requêtes dans un fichier spécifique (841, 141);
des moyens d'examen périodique du fichier (841, 141) enregistré sur l'équipement pour déclencher l'exécution de la requête à l'heure et à la date déterminées ou déclencher son téléchargement.

10. Dispositif de commande anticipée d'une sélection selon la revendication 9, **caractérisé en ce qu**'il comporte des moyens éventuels de transmission à distance de ces requêtes à destination de l'équipement destinataire;

11. Dispositif de commande anticipée d'une sélection selon la revendication 9 ou 10, **caractérisé en ce que** les moyens d'afficher sont constitués par des modules objets rajoutés dans les fichiers ^{*}.DJO appelés selon les besoins par le fichier de configuration WIN.DEF du juke-box.

12. Dispositif de commande anticipée d'une sélection selon la revendication 9, **caractérisé en ce que** les fichiers (840, 841) seront sauvegardés dans un module FILO.DJL et les modifications de programme nécessaires au fonctionnement et à la mise en oeuvre de ce procédé seront téléchargés dans les différents modules.

13. Dispositif de commande anticipée d'une sélection selon la revendication 9, **caractérisé en ce qu**'il comporte également un moyen de définir les règles d'exécution de la file de chansons et de modifier ainsi le comportement du disc-jockey, selon un des critères suivants : premier dans la file, premier sorti (FIFO), de façon aléatoire en sélectionnant les chansons les plus populaires d'abord, en éliminant la deuxième chanson consécutive du même artiste ou en se basant sur une combinaison des règles précédentes ou de toute autre règle.

14. Système numérique formant réseau de télédistribution, **caractérisé en ce que** le réseau de télédistribution comporte un serveur central relié au réseau Internet d'une part et d'autre part, par un second réseau, à un ensemble de juke-boxes, chacun identifiable par un numéro d'identité ou une adresse permettant de charger chaque requête spécifique sur le juke-box destinataire et des moyens de scruter sur chaque juke-box le fichier contenant les requêtes spécifiques pour les faire exécuter lorsque l'heure local et le jour correspondent à l'heure et au jour choisis
